# FASCICULE DE BREVET EUROPEEN

(11) **EP 2 898 278 B1**
(45) Date de publication et mention de la délivrance du brevet: **14.12.2016**
(21) Numéro de dépôt: 13767029.5
(22) Date de dépôt: 29.08.2013
(51) Int. Cl.: F28D 9/00, F28F 9/00, F25J 3/04, F25J 5/00

(54) **ÉCHANGEUR DE CHALEUR ET PROCÉDÉ D'INSTALLATION D'UNE UNITÉ DE SÉPARATION DE GAZ COMPRENANT DE TELS ÉCHANGEURS DE CHALEUR**
WÄRMETAUSCHER UND VERFAHREN ZUR INSTALLATION EINER GASZERLEGUNGSANLAGE MIT EINEM SOLCHEN WÄRMETAUCHER
HEAT EXCHANGER AND METHOD OF INSTALLATION OF A GAZ SEPARATION PLANT COMPRISING SUCH A HEAT EXCHANGER

(30) Priorité: 19.09.2012 FR 1258784
(43) Date de publication de la demande: 29.07.2015
(73) Titulaire: L'Air Liquide Société Anonyme pour l'Etude et l'Exploitation des Procédés Georges Claude, 75007 Paris (FR)
(72) Inventeur: CRAYSSAC, Frédéric, 78140 Velizy (FR); DAVIDIAN, Benoit, 94100 Saint Maur Des Fosses (FR); DEL CORSO, Fabrice, 91400 Saclay (FR); DESCHODT, Sophie, 59120 Loos (FR); TRANIER, Jean-Pierre, 94240 L'hay-les-Roses (FR); WAGNER, Marc, 94100 Saint Maur Des Fosses (FR)
(74) Mandataire: Mercey, Fiona Susan
(86) Numéro de dépôt international: PCT/FR2013/051991
(87) Numéro de publication internationale: WO 2014/044943

(56) Documents cités:
- EP-A1- 1 103 774
- EP-A1- 1 936 311
- DE-A1- 10 110 704
- DE-A1-102010 012 920
- FR-A1- 2 880 418
- GB-A- 2 147 095
- US-A1- 2003 034 152

## Description

La présente invention concerne un échangeur de chaleur pour former une unité de séparation de gaz par transfert de chaleur d'au moins un fluide primaire dit fluide calorigène vers au moins un fluide secondaire dit fluide frigorigène. Par ailleurs, la présente invention concerne un procédé d'installation, pour installer une unité de séparation de gaz par cryogénie, l'unité de séparation de gaz comprenant au moins deux tels échangeurs de chaleur.

La présente invention trouve notamment application dans le domaine de la séparation de gaz par cryogénie. En particulier, la présente invention trouve application dans le domaine de la séparation d'air par cryogénie.

FR2844040A1 décrit un ensemble d'échangeurs comprenant deux échangeurs de chaleur. Chaque échangeur de chaleur comporte des plaques parallèles les unes aux autres et délimitant des passages de fluides, ainsi que des entretoises définissant des canaux. De plus, l'ensemble d'échangeurs comporte des boîtes d'entrée et des boîtes de sortie qui raccordent chaque échangeur de chaleur à des collecteurs primaires et à des collecteurs secondaires.

En outre, un ensemble d'échangeurs de l'art antérieur nécessite une structure d'isolation thermique qui entoure l'ensemble d'échangeurs. La structure d'isolation thermique comprend généralement une charpente métallique supportant une double paroi emplie d'un matériau isolant en vrac, tel que de la perlite. Cette charpente métallique, cette double paroi et ce matériau isolant sont mis en place sur le site d'exploitation de l'ensemble d'échangeurs.

Cependant, la structure d'isolation thermique est complexe, donc coûteuse. En particulier, la fabrication et l'assemblage de la charpente métallique, de la double paroi et du matériau isolant sont longs et coûteux. En outre, dans un tel ensemble d'échangeurs de l'art antérieur, une fuite de liquide cryogénique peut atteindre des éléments porteurs de la charpente qui est usuellement en acier non résilient à basse température, ce qui peut causer la rupture de tels éléments porteurs.

En outre, lors de la séparation d'air par cryogénie dans un échangeur de chaleur en alliage d'aluminium, l'écoulement d'oxygène sous haute pression peut causer une inflammation directe de l'alliage d'aluminium sur un point chaud créé localement par une déformation plastique, une rupture de brasure, un impact de particules, des frottements d'écoulement etc. Or le risque d'inflammation directe augmente avec la pression de service dans l'échangeur de chaleur.

La présente invention vise notamment à résoudre, en tout ou partie, les problèmes mentionnés ci-avant.

À cet effet, l'invention a pour objet un échangeur de chaleur, pour former une unité de séparation de gaz par transfert de chaleur d'au moins un fluide primaire dit fluide calorigène vers au moins un fluide secondaire dit fluide frigorigène, l'échangeur de chaleur comportant au moins :
- une pluralité de plaques, les plaques étant disposées parallèlement les unes aux autres, les plaques délimitant des passages conformés pour l'écoulement de fluide calorigène ou de fluide frigorigène ; et
- des entretoises d'échange thermique qui s'étendent entre les plaques de façon à définir des canaux, chaque canal étant adapté pour canaliser une partie du fluide calorigène ou une partie du fluide frigorigène ;
l'échangeur de chaleur étant caractérisé en ce qu'il comporte en outre une enveloppe couvrant totalement ou partiellement la pluralité de plaques, l'enveloppe comprenant au moins une couche d'isolation thermique dite incombustible qui est sensiblement incombustible dans les conditions de température et de pression de l'oxygène lorsque l'échangeur de chaleur est en service, notamment à une température comprise entre +65 °C et -196°C et à une pression comprise entre 1 bar A et 120 bar A.

Usuellement, on dénomme « matériau compatible oxygène » un matériau sensiblement incombustible dans les conditions de température et de pression de l'oxygène lorsque l'échangeur de chaleur est en service.

Ainsi, un tel échangeur de chaleur possède une isolation thermique individuelle, ce qui permet d'accélérer l'installation d'une unité de séparation de gaz sur son site d'exploitation. En effet, lorsque l'échangeur de chaleur est livré sur le site d'exploitation, son isolation thermique a déjà été mise en place sur le site de fabrication de l'échangeur de chaleur.

De plus, la couche d'isolation thermique dite incombustible limite voire évite les risques d'inflammation en présence d'oxygène, ce qui augmente la sécurité des opérateurs et du matériel. En général, l'inflammabilité est grande avec une température entre +65 °C et -196 °C et une pression entre 1 bar A et 120 bar A.

Selon un mode de réalisation de l'invention, la couche d'isolation thermique incombustible est formée de fibres de céramique réfractaire.

Ainsi, de telles fibres de céramique réfractaire forment, pour l'échangeur de chaleur, une isolation thermique efficace.

Selon une variante de l'invention, la céramique réfractaire peut être sélectionnée dans le groupe constitué par une laine de laitier, une laine minérale telle que la laine de roche ou la laine de verre, des fibres minérales artificielles, les fibres d'alumine, les fibres siliceuses par exemple en mulite.

Selon un mode de réalisation de l'invention, ladite au moins une couche d'isolation thermique incombustible a une épaisseur comprise entre 20 mm et 100 mm, de préférence entre 45 mm et 55 mm.

Ainsi, une telle couche d'isolation thermique formée de céramique réfractaire contribue à isoler efficacement l'échangeur de chaleur.

Selon un mode de réalisation de l'invention, l'enveloppe est fixée à la pluralité de plaques par des organes mécaniques tels que des ergots ou des tétons conformés pour un encliquetage ou un emmanchement.

Ainsi, des tels organes mécaniques permettent de fixer de manière fiable et rapide l'enveloppe.

Selon un mode de réalisation de l'invention, l'enveloppe comprend en outre au moins une couche d'isolation thermique en polyuréthane ou un matériau organique d'isolation thermique équivalente, ladite au moins une couche en polyuréthane ayant de préférence une épaisseur comprise entre 150 mm et 350 mm.

Ainsi, une telle couche d'isolation thermique en polyuréthane ou équivalent contribue à isoler efficacement l'échangeur de chaleur.

Selon un mode de réalisation de l'invention, la couche d'isolation thermique incombustible couvre une partie dite froide de la pluralité de plaques, et au moins une couche d'isolation thermique en polyuréthane couvre une partie dite chaude, la partie chaude étant située à l'opposé de la partie froide, la température de la partie froide étant inférieure à la température de la partie chaude lorsque l'échangeur de chaleur est en service.

Ainsi, tout l'échangeur de chaleur est efficacement isolé, ce qui dispense de l'entourer d'une enceinte avec un isolant thermique supplémentaire comme la perlite dans l'art antérieur. Usuellement, les parties froide et chaude sont dénommées respectivement « bout froid » et « bout chaud ».

Dans ce mode de réalisation, la couche d'isolation thermique incombustible couvre la partie froide, laquelle comprend de l'oxygène dans des conditions d'inflammabilité. Tandis que la partie chaude est couverte par une couche d'isolation thermique éventuellement combustible, tel que du polyuréthane, car elle ne présente pas les conditions d'inflammabilité en présence d'oxygène. Ainsi, le coût des couches d'isolation thermique est optimisé, en limitant au strict nécessaire la quantité de couche incombustible.

Selon une variante de l'invention, l'enveloppe peut en outre comprendre une couche d'isolation thermique combustible, tel que du polyuréthane, qui s'étend sur la couche d'isolation thermique incombustible. En effet, la surface externe de la couche d'isolation thermique incombustible ne présente pas les conditions d'inflammabilité, car elle est à une température supérieure au point de rosée de l'air.

Selon un mode de réalisation de l'invention, l'échangeur de chaleur a globalement la forme d'un parallélépipède rectangle, et la couche d'isolation thermique incombustible comprend des panneaux d'isolation thermique comprenant chacun au moins deux parois métalliques et au moins un film en matériau isolant et disposé entre deux parois métalliques, le film en matériau isolant étant de préférence sous vide.

Ainsi, une telle forme parallélépipédique permet de définir des passages un transfert de chaleur efficace, en particulier dans une unité de séparation de gaz par cryogénie.

Comme les parois métalliques sont incombustibles et étanches, le film en matériau isolant peut être en matériau combustible, car il n'est pas en contact avec l'oxygène.

Selon un mode de réalisation de l'invention, l'échangeur de chaleur comprend en outre des boîtes d'alimentation conformées pour introduire ou évacuer du fluide calorigène ou du fluide frigorigène dans ou hors de certains desdits passages, les boîtes d'alimentation étant liées à la pluralité de plaques par des moyens de fixation mécanique, les moyens de fixation mécanique étant de préférence sélectionnés dans le groupe constitué par des vis, des rivets, des éléments d'encliquetage et des éléments d'emmanchement.

Ainsi, de telles boîtes d'alimentation peuvent être liées à la pluralité de plaques de manière très rapide sur le site d'exploitation de l'échangeur de chaleur.

Selon un mode de réalisation de l'invention, l'échangeur de chaleur comprend en outre des organes de suspension, tels que des tiges, des crochets ou des tirefonds, les organes de suspension composés de matériau thermiquement isolant tel que des fibres de verre, les organes de suspension étant conformés pour permettre de suspendre l'échangeur de chaleur à des poutres, les organes de suspension étant solidarisés à la pluralité de plaques, de préférence par soudure ou brasure.

Ainsi, de tels organes de suspension permettent de manutentionner l'échangeur de chaleur de manière sûre et rapide sur son site d'exploitation.

Selon une variante du mode de réalisation précédent, les organes de suspension sont disposés vers des bords de la pluralité de plaques. Ainsi, les organes de suspension permettent d'équilibrer le poids de l'échangeur de chaleur suspendu.

Par ailleurs la présente invention a pour objet un procédé d'installation, pour installer une unité de séparation de gaz par cryogénie, l'unité de séparation de gaz comprenant au moins deux échangeurs de chaleur selon l'invention, le procédé d'installation comprenant les étapes :
- transporter au moins deux échangeurs de chaleur sur le site d'exploitation de l'unité de séparation ;
- installer un châssis comportant au moins deux poutres qui sont sensiblement parallèles et horizontales et qui sont supportées par des montants sensiblement verticaux, les poutres et les montants étant de préférence métalliques, par exemple en un acier carboné ;
- suspendre chaque échangeur de chaleur à deux poutres au moyen d'organes de suspension composées de matériau thermiquement isolant tel que des fibres de verre ; et
- lier des boîtes d'alimentation à la pluralité de plaques par des moyens de fixation mécanique, les moyens de fixation mécanique étant de préférence sélectionnés dans le groupe constitué par des vis, des rivets, des éléments d'encliquetage et des éléments d'emmanchement.

Ainsi, un tel procédé d'installation permet d'installer rapidement une unité de séparation de gaz par cryogénie sur son site d'exploitation.

De plus, le procédé d'installation permet un gain de temps d'installation, car il ne nécessite pas d'étape pour entourer les échangeurs de chaleur d'une enceinte avec un isolant thermique supplémentaire comme la perlite dans l'art antérieur, en raison de l'isolation efficace de chaque échangeur de chaleur selon l'invention.

Selon un mode de réalisation de l'invention, le procédé d'installation comprend en outre les étapes :
- solidariser des raccords respectivement sur les boîtes d'alimentation, de préférence par soudure ; et
- solidariser des collecteurs à des raccords respectifs, de préférence par soudure.

Ainsi, de telles étapes permettent de réaliser complètement l'unité de séparation de gaz selon l'invention.

Selon une variante de l'invention, le procédé d'installation comprend en outre des étapes pour lier à l'ensemble d'échangeurs des composants d'introduction d'air conditionné, des gaines d'évacuation des fumées et/ou une colonne centrale. Ainsi, de telles étapes permettent de réaliser complètement l'unité de séparation de gaz selon l'invention.

Les modes de réalisation de l'invention et les variantes de l'invention mentionnés ci-avant peuvent être pris isolément ou selon toute combinaison techniquement possible.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue schématique en perspective éclatée d'un échangeur de chaleur conforme à l'invention ;
- la figure 2 est une vue schématique en perspective de l'échangeur de chaleur de la figure 1 ;
- la figure 3 est une vue schématique en perspective d'une partie d'un ensemble d'échangeurs conforme à l'invention et comprenant l'échangeur de chaleur de la figure 1, au cours d'une étape d'assemblage ; et
- la figure 4 est une vue similaire à la figure 2 de l'ensemble d'échangeurs de la figure 2, au cours d'une étape ultérieure d'assemblage.

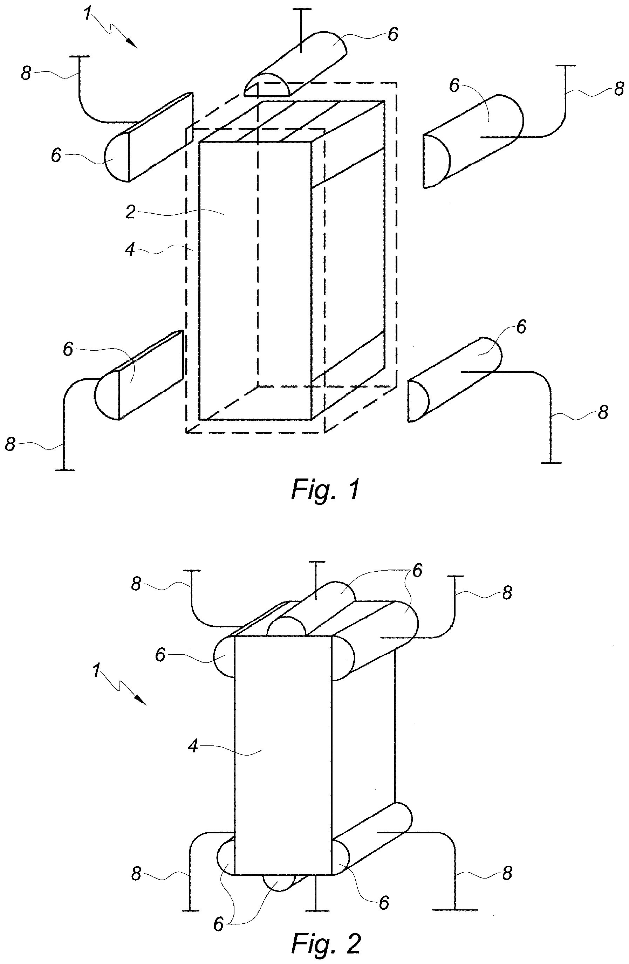

Les figures 1 et 2 illustrent un échangeur de chaleur 1, pour former une unité non représentée de séparation de gaz par transfert de chaleur d'au moins un fluide primaire dit fluide calorigène vers au moins un fluide secondaire dit fluide frigorigène.

L'échangeur de chaleur 1 comporte une pluralité de plaques 2. De manière connue en soi, les plaques 2 sont disposées parallèlement les unes aux autres. Les plaques 2 délimitent des passages non représentés qui sont conformés pour l'écoulement de fluide calorigène ou de fluide frigorigène.

Dans l'exemple des figures 1 et 2, Chaque plaque 2 a globalement la forme d'un rectangle. L'échangeur de chaleur 1 a globalement la forme d'un parallélépipède rectangle. La longueur de l'échangeur de chaleur 1 est ici d'environ 6 m, sa largeur d'environ 2 m et sa hauteur d'environ 2 m.

Par convention, la longueur d'un échangeur de chaleur est mesurée parallèlement à la direction d'écoulement du fluide frigorigène dans les passages. La largeur d'un échangeur de chaleur est mesurée perpendiculairement à la longueur. La hauteur d'un échangeur de chaleur est mesurée suivant la direction d'empilement de ses plaques.

L'échangeur de chaleur 1 comporte en outre des entretoises d'échange thermique non représentées. Les entretoises d'échange thermique s'étendent entre les plaques 2 de façon à définir des canaux non représentés. De manière connue en soi, chaque canal est adapté pour canaliser une partie du fluide calorigène ou une partie du fluide frigorigène.

De plus, l'échangeur de chaleur 1 comporte une enveloppe 4 qui couvre ici totalement la pluralité de plaques 2. L'enveloppe 4 comprend une couche d'isolation thermique formée de fibres de céramique réfractaire. La couche d'isolation thermique formée de fibres de céramique réfractaire a ici une épaisseur d'environ 50 mm. L'enveloppe 4 a donc aussi une épaisseur d'environ 50 mm.

L'enveloppe 4 est fixée à la pluralité de plaques 2 par des organes mécaniques non représentés, qui sont ici formés par des ergots conformés pour un encliquetage.

L'enveloppe 4 peut en outre comprendre des panneaux d'isolation thermique plaqués sur une couche d'isolation thermique. Chaque panneau d'isolation thermique peut comprendre deux parois métalliques et un film isolant sous vide entre les parois métalliques.

L'échangeur de chaleur 1 comprend en outre des boîtes d'alimentation 6 qui sont conformées pour introduire ou évacuer du fluide calorigène ou du fluide frigorigène dans ou hors des passages de fluide. Les boîtes d'alimentation 6 sont liées à la pluralité de plaques 2 par des moyens de fixation mécanique non représentés. Ces moyens de fixation mécanique peuvent ici être des vis.

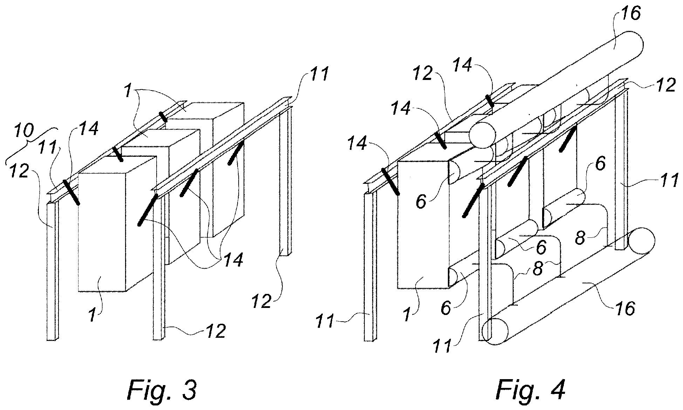

En outre, l'échangeur de chaleur 1 comprend des piquages ou raccords 8, qui ont pour fonction de raccorder les boîtes d'alimentation 6 à des collecteurs primaires ou secondaires, comme le montre la figure 4 décrite ci-après.

Les figures 3 et 4 illustrent une étape d'un procédé d'installation d'une unité de séparation de gaz par cryogénie. Cette unité de séparation de gaz comprend trois échangeurs de chaleur 1.

Le procédé d'installation comprend les étapes :
- transporter les échangeurs de chaleur 1 sur le site d'exploitation de l'unité de séparation ;
- installer un châssis 10 comportant deux poutres 11 qui sont sensiblement parallèles et horizontales et qui sont supportées par des montants 12 sensiblement verticaux ; les poutres 11 et les montants 12 sont ici en un acier carboné ;
- suspendre chaque échangeur de chaleur 1 aux deux poutres 11 au moyen de tiges de suspension 14 qui sont composées de fibres de verre thermiquement isolantes ; et
- lier des boîtes d'alimentation 6 à la pluralité de plaques 2 par des moyens de fixation mécanique, en l'occurrence par des vis.

Ainsi, l'assemblage des trois échangeurs de chaleur 1 forme une batterie d'échangeurs.

De plus, le procédé d'installation comprend les étapes :
- solidariser des raccords 8 respectivement sur les boîtes d'alimentation 6, ici par soudure ; et
- solidariser des collecteurs 16 à des raccords respectifs 8, ici par soudure.

Après réalisation du procédé d'installation, l'unité de séparation de gaz par cryogénie est installée sur son site d'exploitation.

Les plaques et les ailettes de l'échangeur de chaleur peuvent être en aluminium ou en acier réfractaire (par exemple en Inconel ®).

## Revendications

1. Échangeur de chaleur (1, 101), pour former une unité de séparation de gaz par transfert de chaleur d'au moins un fluide primaire dit fluide calorigène vers au moins un fluide secondaire dit fluide frigorigène, l'échangeur de chaleur (1, 101) comportant au moins :
- une pluralité de plaques (2), les plaques (2) étant disposées parallèlement les unes aux autres, les plaques (2) délimitant des passages conformés pour l'écoulement de fluide calorigène ou de fluide frigorigène ; et
- des entretoises d'échange thermique qui s'étendent entre les plaques (2) de façon à définir des canaux, chaque canal étant adapté pour canaliser une partie du fluide calorigène ou une partie du fluide frigorigène ;
l'échangeur de chaleur (1, 101) étant **caractérisé en ce qu'**il comporte en outre une enveloppe (4) couvrant totalement ou partiellement la pluralité de plaques (2), l'enveloppe (4) comprenant au moins une couche d'isolation thermique dite incombustible qui est sensiblement incombustible dans les conditions de température et de pression de l'oxygène lorsque l'échangeur de chaleur est en service, notamment à une température comprise entre +65 °C et -196 °C et à une pression comprise entre 1 bar A et 120 bar A.

2. Échangeur de chaleur (1, 101) selon la revendication 1, dans lequel la couche d'isolation thermique incombustible est formée de fibres de céramique réfractaire.

3. Échangeur de chaleur (1, 101) selon la revendication 1, dans lequel ladite au moins une couche d'isolation thermique incombustible a une épaisseur comprise entre 20 mm et 100 mm, de préférence entre 45 mm et 55 mm.

4. Échangeur de chaleur (1, 101) selon l'une des revendications précédentes, dans lequel l'enveloppe (4) est fixée à la pluralité de plaques (2) par des organes mécaniques tels que des ergots ou des tétons conformés pour un encliquetage ou un emmanchement.

5. Échangeur de chaleur (1, 101) selon l'une des revendications précédentes, dans lequel l'enveloppe comprend en outre au moins une couche d'isolation thermique en polyuréthane ou un matériau organique d'isolation thermique équivalente, ladite au moins une couche d'isolation thermique en polyuréthane ayant de préférence une épaisseur comprise entre 150 mm et 350 mm.

6. Échangeur de chaleur selon la revendication 4, dans lequel la couche d'isolation thermique incombustible couvre une partie dite froide de la pluralité de plaques, et dans lequel au moins une couche d'isolation thermique en polyuréthane couvre une partie dite chaude, la partie chaude étant située à l'opposé de la partie froide, la température de la partie froide étant inférieure à la température de la partie chaude lorsque l'échangeur de chaleur est en service.

7. Échangeur de chaleur (1, 101) selon l'une des revendications précédentes, dans lequel l'échangeur de chaleur (1, 101) a globalement la forme d'un parallélépipède rectangle, et dans lequel la couche d'isolation thermique incombustible comprend des panneaux d'isolation thermique comprenant chacun au moins deux parois métalliques et au moins un film en matériau isolant disposé entre deux parois métalliques, le film en matériau isolant étant de préférence sous vide.

8. Échangeur de chaleur (1, 101) selon l'une des revendications précédentes, comprenant en outre des boîtes d'alimentation (6, 106) conformées pour introduire ou évacuer du fluide calorigène ou du fluide frigorigène dans ou hors de certains desdits passages, les boîtes d'alimentation (6, 106) étant liées à la pluralité de plaques (2) par des moyens de fixation mécanique, les moyens de fixation mécanique étant de préférence sélectionnés dans le groupe constitué par des vis, des rivets, des éléments d'encliquetage et des éléments d'emmanchement.

9. Échangeur de chaleur selon l'une des revendications précédentes, comprenant en outre des organes de suspension, tels que des tiges, des crochets ou des tirefonds, les organes de suspension composés de matériau thermiquement isolant tel que des fibres de verre, les organes de suspension étant conformés pour permettre de suspendre l'échangeur de chaleur à des poutres, les organes de suspension étant solidarisés à la pluralité de plaques, de préférence par soudure ou brasure.

10. Procédé d'installation, pour installer une unité de séparation de gaz par cryogénie, l'unité de séparation de gaz comprenant au moins deux échangeurs de chaleur (1) selon l'une des revendications 1 à 9, le procédé d'installation comprenant les étapes :
- transporter au moins deux échangeurs de chaleur (1) sur le site d'exploitation de l'unité de séparation ;
- installer un châssis (10) comportant au moins deux poutres (11) qui sont sensiblement parallèles et horizontales et qui sont supportées par des montants (12) sensiblement verticaux, les poutres (11) et les montants (12) étant de préférence métalliques, par exemple en un acier carboné ;
- suspendre chaque échangeur de chaleur (1) à deux poutres (11) au moyen d'organes de suspension (14) composés de matériau thermiquement isolant tel que des fibres de verre ; et
- lier des boîtes d'alimentation (6) à la pluralité de plaques (2) par des moyens de fixation mécanique, les moyens de fixation mécanique étant de préférence sélectionnés dans le groupe constitué par des vis, des rivets, des éléments d'encliquetage et des éléments d'emmanchement.

11. Procédé d'installation selon la revendication 10, comprenant en outre les étapes :
- solidariser des raccords (8) respectivement sur les boîtes d'alimentation, de préférence par soudure ; et
- solidariser des collecteurs (16) à des raccords respectifs, de préférence par soudure.

## Patentansprüche

1. Wärmetauscher (1, 101) zur Bildung einer Gastrennungseinheit durch Wärmeübertragung von zumindest einem Primärfluid, das Wärmemittel genannt wird, auf zumindest ein Sekundärfluid, das Kältemittel genannt wird, wobei der Wärmetauscher (1, 101) zumindest Folgendes umfasst:
- eine Vielzahl von Platten (2), wobei die Platten (2) parallel zueinander angeordnet sind, die Platten (2) Durchlässe eingrenzen, die zum Abfließen des Wärmemittels oder des Kältemittels ausgebildet sind; und
- Abstandhalter für den Wärmetausch, die sich zwischen den Platten (2) erstrecken, um Kanäle zu definieren, wobei jeder Kanal ausgeführt ist, um einen Teil des Wärmemittels oder einen Teil des Kältemittels zu kanalisieren;
wobei der Wärmetauscher (1, 101) **dadurch gekennzeichnet ist, dass** er darüber hinaus eine Hülle (4) umfasst, welche die Vielzahl von Platten (2) vollständig oder teilweise abdeckt, wobei die Hülle (4) zumindest eine unbrennbar genannte thermische Isolierschicht umfasst, die unter den Temperatur- und Druckbedingungen des Sauerstoffs im Wesentlichen unbrennbar ist, wenn der Wärmetauscher in Betrieb ist, vor allem bei einer Temperatur zwischen +65°C und -196°C und bei einem Druck zwischen 1 bar A und 120 bar A.

2. Wärmetauscher (1, 101) nach Anspruch 1, wobei die unbrennbare thermische Isolierschicht aus feuerfesten Keramikfasern gebildet wird.

3. Wärmetauscher (1, 101) nach Anspruch 1, wobei die zumindest eine unbrennbare thermische Isolierschicht eine Dicke zwischen 20 mm und 100 mm, vorzugsweise zwischen 45 mm und 55 mm aufweist.

4. Wärmetauscher (1, 101) nach einem der vorherigen Ansprüche, wobei die Hülle (4) durch mechanische Elemente, wie Steckerstifte oder Zapfen an der Vielzahl von Platten (2) befestigt ist, die zum Einrasten oder Einpressen ausgebildet sind.

5. Wärmetauscher (1, 101) nach einem der vorherigen Ansprüche, wobei die Hülle darüber hinaus zumindest eine thermische Isolierschicht aus Polyurethan oder aus einem gleichwertigen organischen Material zur thermischen Isolierung umfasst, wobei die zumindest eine thermische Isolierschicht aus Polyurethan vorzugsweise eine Dicke zwischen 150 mm und 350 mm aufweist.

6. Wärmetauscher nach Anspruch 4, wobei die unbrennbare thermische Isolierschicht einen kalt genannten Teil der Vielzahl von Platten abdeckt, und wobei zumindest eine thermische Isolierschicht aus Polyurethan einen warm genannten Teil abdeckt, wobei sich der warme Teil gegenüber dem kalten Teil befindet, wobei die Temperatur des kalten Teils geringer ist, als die Temperatur des warmen Teils, wenn der Wärmetauscher in Betrieb ist.

7. Wärmetauscher (1, 101) nach einem der vorherigen Ansprüche, wobei der Wärmetauscher (1, 101) im Allgemeinen die Form eines rechtwinkeligen Quaders aufweist, und wobei die unbrennbare thermische Isolierschicht thermische Isolierpaneele umfasst, die jeweils zumindest zwei metallische Wände und zumindest eine Folie aus Isoliermaterial umfassen, die zwischen den beiden metallischen Wänden angeordnet ist, wobei die Folie aus Isoliermaterial vorzugsweise unter Vakuum steht.

8. Wärmetauscher (1, 101) nach einem der vorherigen Ansprüche, darüber hinaus Einspeisebehälter (6, 106) umfassend, die ausgebildet sind, um Wärmemittel oder Kältemittel in bestimmte Durchlässe einzubringen oder daraus auszubringen, wobei die Einspeisebehälter (6, 106) durch mechanische Befestigungsmittel mit der Vielzahl von Platten (2) verbunden sind, wobei die mechanischen Befestigungsmittel vorzugsweise aus der Gruppe ausgewählt werden, die durch Schrauben, Nieten, Einrastelemente und Einpresselemente gebildet wird.

9. Wärmetauscher nach einem der vorherigen Ansprüche, darüber hinaus Hängeelemente, wie Stangen, Haken oder Ankerschrauben, umfassend, wobei sich die Hängeelemente aus einem thermischen Isoliermaterial, wie Glasfaser zusammensetzen, wobei die Hängeelemente ausgebildet sind, um es zu ermöglichen, den Wärmetauscher auf Balken aufzuhängen, wobei die Hängeelemente vorzugsweise durch Verschweißen oder Löten fest mit der Vielzahl von Platten verbunden sind.

10. Installationsverfahren zum Installieren einer Gastrennungseinheit durch Kryotechnik, wobei die Gastrennungseinheit zumindest zwei Wärmetauscher (1) nach einem der Ansprüche 1 bis 9 umfasst, wobei das Installationsverfahren die folgenden Schritte umfasst:
- Transportieren zumindest zweier Wärmetauscher (1) an den Ort zum Betreiben der Trennungseinheit;
- Installieren eines Gestells (10) zumindest zwei Balken (11) umfassend, die im Wesentlichen parallel und horizontal sind, und die durch im Wesentlichen vertikale Ständer (12) getragen werden, wobei die Balken (11) und die Ständer (12) vorzugsweise aus Metall, wie zum Beispiel aus Kohlenstoffstahl sind;
- Aufhängen eines jeden Wärmetauschers (1) an zwei Balken (11) mithilfe von Hängeelementen (14), die aus einem thermischen Isoliermaterial, wie Glasfaser gefertigt sind; und
- Verbinden der Einspeisebehälter (6) mit der Vielzahl von Platten (2) durch mechanische Befestigungsmittel, wobei die mechanischen Befestigungsmittel vorzugsweise aus der Gruppe ausgewählt werden, die durch Schrauben, Nieten, Einrastelemente und Einpresselemente gebildet wird.

11. Installationsverfahren nach Anspruch 10, darüber hinaus die folgenden Schritte umfassend:
- Festverbinden der Anschlüsse (8) jeweils mit den Einspeisebehältern, vorzugsweise durch Verschweißen; und
- Festverbinden der Kollektoren (16) mit den jeweiligen Anschlüssen, vorzugsweise durch Verschweißen.

## Claims

1. Heat exchanger (1, 101), for forming a gas separation unit via heat transfer of at least one primary fluid referred to as heating fluid to at least one secondary fluid referred to as cooling fluid, the heat exchanger (1, 101) comprising at least:
- a plurality of plates (2), with the plates (2) being arranged in parallel to one another, the plates (2) defining passages shaped for the flow of heating fluid or of cooling fluid; and
- heat exchange spacers that extend between the plates (2) in such a way as to define channels, each channel being adapted to channel a portion of the heating fluid or a portion of the cooling fluid;
the heat exchanger (1, 101) being **characterised in that** it further comprises a casing (4) that entirely or partially covers the plurality of plates (2), with the casing (4) comprising at least one non-combustible heat insulation layer that is substantially non-combustible in the conditions of temperature and of pressure of the oxygen when the heat exchanger is in service, in particular at a temperature between +65 °C and -196 °C and at a pressure between 1 bar A and 120 bar A.

2. Heat exchanger (1, 101) according to claim 1, wherein the non-combustible heat insulation layer is formed of refractory ceramic fibres.

3. Heat exchanger (1, 101) according to claim 1, wherein said at least one non-combustible heat insulation layer has a thickness between 20 mm and 100 mm, preferably between 45 mm and 55 mm.

4. Heat exchanger (1, 101) according to one of the preceding claims, wherein the casing (4) is fastened to the plurality of plates (2) by mechanical members such as lugs or tags shaped for a snap-fitting or a press-fitting.

5. Heat exchanger (1, 101) according to one of the preceding claims, wherein the casing further comprises at least one heat insulation layer made of polyurethane or an equivalent heat insulation organic material, said at least one heat insulation layer made of polyurethane preferably having a thickness between 150 mm and 350 mm.

6. Heat exchanger according to claim 4, wherein the non-combustible heat insulation layer covers a portion referred to as cold of the plurality of plates, and wherein at least one heat insulation layer made of polyurethane covers a portion referred to as hot, with the hot portion being located opposite the cold portion, with the temperature of the cold portion being less than the temperature of the hot portion when the heat exchanger is in service.

7. Heat exchanger (1, 101) according to one of the preceding claims, wherein the heat exchanger (1, 101) globally has the shape of a rectangle parallelepiped, and wherein the non-combustible heat insulation layer comprises heat insulation panels with each cone comprising at least two metal walls and at least one film made of insulating material arranged between two metal walls, with the film made of insulating material being preferably in a vacuum.

8. Heat exchanger (1, 101) according to one of the preceding claims, further comprising supply boxes (6, 106) shaped to introduce or to remove heating fluid or cooling fluid into or out of some of said passages, with the supply boxes (6, 106) being linked to the plurality of plates (2) by means of mechanical fastening, with the means of mechanical fastening preferably being selected from the group comprised of screws rivets, snap-fitting elements and press-fitting elements.

9. Heat exchanger according to one of the preceding claims, further comprising suspension members, such as rods, hooks or sleeper screws, the suspension members comprised of heat insulating material such as glass fibres, with the suspension members being shaped in order to make it possible to hang the heat exchanger from beams, with the suspension members being made integral with the plurality of plates, preferably by welding or brazing.

10. Method of installation, for installing a gas separation unit via cryogenics, with the gas separation unit comprising at least two heat exchangers (1) according to one of claims 1 to 9, with the method of installation comprising the steps of:
- transporting at least two heat exchangers (1) on the operating site of the separation unit;
- installing a frame (10) comprising at least two beams (11) which are substantially parallel and horizontal and which are supported by substantially vertical uprights (12), with the beams (11) and the uprights (12) being more preferably made of metal, for example made or carbon steel;
- hanging each heat exchanger (1) from two beams (11) by means of suspension members (14) comprised of a heat insulating material such as glass fibres; and
- linking supply boxes (6) to the plurality of plates (2) by mechanical means of fastening, with the mechanical means of fastening being more preferably selected from the group comprising screws, rivets, snap-fitting elements and press-fitting elements.

11. Method of installation according to claim 10, further comprising the steps of:
- fastening the connectors (8) respectively on the supply boxes, more preferably via welding; and
- fastening collectors (16) to respective connectors, more preferably via welding.
